# EUROPEAN PATENT APPLICATION

(11) **EP 4 679 589 A1**
(43) Date of publication of application: **14.01.2026**
(21) Application number: 24214423.6
(22) Date of filing: 21.11.2024
(51) Int. Cl.: H01M 50/204, H01M 50/244, H01M 50/251, H01M 50/50, H01M 50/262

(54) **BATTERY RACK**

(30) Priority: 12.07.2024 CN 202421651543 U; 02.08.2024 WO PCT/CN2024/109373
(71) Applicant: Eve Energy Storage Co., Ltd., Wuhan, Hubei 430000 (CN)
(72) Inventor: XIE, Haiyuan, WUHAN, 430000 (CN)
(74) Representative: Cabinet Beaumont

(57) **Abstract**

A battery rack is provided, which includes a frame (1) and a wire-tying unit (3). The frame (1) is configured to support a battery pack, the wire-tying unit (3) is detachably connected to the frame (1), the wire-tying unit (3) comprises a base (31) and at least two wire-tying rods (32), the base (31) is connected to the frame (1), the wire-tying rods (32) are arranged on the base (31) at intervals in a first direction, and the wire-tying rods (32) extend in a second direction. The wire-tying rod is configured to connect a connection wire of the battery pack, and the first direction is arranged at an angle with respect to the second direction.

## Description

### TECHNICAL FIELD

The present application relates to the field of battery technology, for example, a battery rack.

### BACKGROUND

With the increasing demand for energy, new energy sources such as wind and solar energy are gradually increasing. However, the generation and use of these energy sources are often separated in time and space, and the energy storage battery system is the key to addressing the issue of separation of energy generation and use in time and space.

The main form of energy storage battery systems is composed of a battery rack and multiple battery packs located on the battery rack.

The related technology has the following defects: multiple battery packs are arranged on the battery rack, each battery pack includes multiple connection wires for aggregation or for being connected to external electrical appliances, the connection wires are not fixed to the battery rack, which causes the circuit layout to be chaotic, and causes interference between high and low voltage connection wires, and it is difficult to find when individual battery pack wires are damaged in the later stage, and the maintenance efficiency is low.

### SUMMARY

A battery rack is provided according to the present application, which has a simple structure, and the wire-tying unit of the battery rack can connect the connection wires of the battery pack to make the connection wire layout orderly and the later maintenance conveniently.

The battery rack includes a frame and a wire-tying unit. The frame is configured to support a battery pack, the wire-tying unit is detachably connected to the frame, the wire-tying unit includes a base and at least two wire-tying rods, the base is connected to the frame, the wire-tying rods are arranged on the base at intervals in a first direction, and the wire-tying rods extend in a second direction. The wire-tying rods are configured to connect a connection wire of the battery pack, and the first direction is arranged at an angle with respect to the second direction.

The beneficial effect of the present application is as follows: the battery rack is provided with the wire-tying unit having the wire-tying rods so that the connection wires of each battery pack are connected to the wire-tying rods and arranged in the length direction of the wire-tying rods, the layout of multiple connection wires is orderly and arranged neatly, the case where multiple connection wires are entangled with each other due to being in disorder can be reduced, and it facilitates the later maintenance and lookup. By arranging multiple wire-tying rods at intervals, different connection wires can be connected to different wire-tying rods at intervals so that the interference between different connection wires can be reduced. By detachably arranging the wire-tying unit on the battery rack, the disassembly and assembly are convenient, the operator can select the number of wire-tying units according to the practical demand, the waste of the wire-tying units is reduced, and the later maintenance replacement or reuse is also facilitated.

### BRIEF DESCRIPTION OF THE DRAWINGS

FIG. 1 is a schematic structural diagram of a battery rack according to an embodiment of the present application;
FIG. 2 is a schematic enlarged view of part A in FIG. 1;
FIG. 3 is a schematic structural diagram of a battery rack according to another embodiment of the present application;
FIG. 4 is a schematic structural diagram of a wire-tying unit according to an embodiment of the present application;
FIG. 5 is a schematic structural diagram of a base according to an embodiment of the present application;
FIG. 6 is a schematic diagram showing partial structure of a wire-tying rod according to an embodiment of the present application; and
FIG. 7 is a schematic structural diagram of a battery rack according to another embodiment of the present application.

### Reference list:

- 1: frame
- 2: tray
- 3: wire-tying unit
- 31: base
- 311: main body
- 312: engaging portion
- 313: limiting portion
- 314: engaging groove
- 315: positioning portion
- 32: wire-tying rod
- 321: positioning hole
- 3211: guide hole
- 3212: connection hole
- 4: enclosure
- 41: fixed part
- 42: blocking part
- 5: mounting slot
- 6: connection block
- 7: reinforcing connecting post
- 8: separator

### DETAILED DESCRIPTION

The present application is further described in detail hereinafter in conjunction with the drawings and embodiments. It can be understood that the embodiments described herein are intended to interpret the present application and not to qualify the present application. It should also be noted that, for the sake of description, only some of the structures related to the present application rather than all structures are shown in the drawings.

In the description of this application, it is to be noted that, unless otherwise expressly specified and limited, the terms "connected to each other", "connected" or "fixed" are to be construed in a broad sense, for example, as permanently connected or detachably connected or integrally formed; mechanically connected or electrically connected; directly connected to each other or indirectly connected to each other via an intermediary; or internally connection of two components or interaction relationship between two components. For the person of ordinary skill in the art, meanings of the terms in the present application may be construed based on situations.

In the present application, unless otherwise expressly specified and limited, when a first feature is described as "above" or "below" a second feature, the first feature and the second feature may be in direct contact, or be in contact via another feature between the two features. Moreover, when the first feature is described as "on", "above" or "over" the second feature, the first feature may be right on, above or over the second feature or the first feature may be obliquely on, above or over the second feature, or the first feature may be at a higher level than the second feature. When the first feature is described as "under", "below" or "underneath" the second feature, the first feature may be right under, below or underneath the second feature or the first feature may be obliquely under, below or underneath the second feature, or the first feature may be at a lower level than the second feature.

In the description of this article, it should be understood that the orientation or position relationships indicated by the terms such as "upper", "lower", "right", etc., are based on the orientation or position relationship shown in the drawings, which is only for the convenience of description and simplification of operation, and does not indicate or imply that the device or element referred to must have a specific orientation, be constructed and operated in a specific orientation, and therefore cannot be understood as a limitation of the present application. Furthermore, the terms "first" and "second" are used to distinguish in the description and have no special meaning.

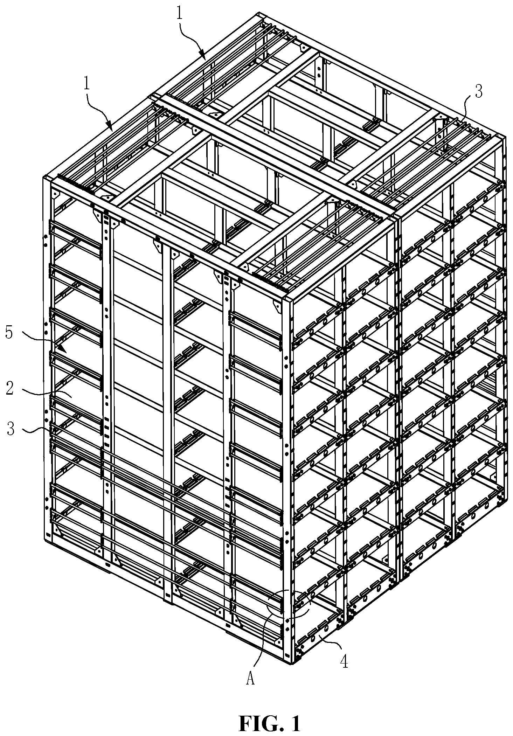

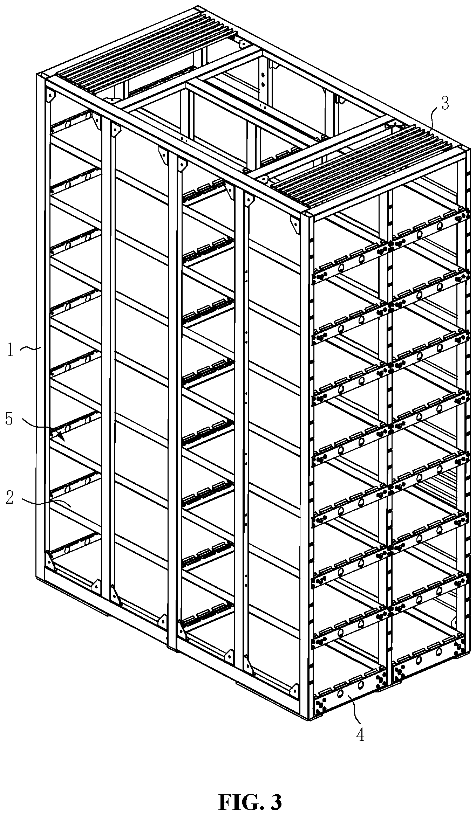

As shown in FIG. 1 to FIG. 4, the battery rack of the embodiment of the present application includes a frame 1 and a wire-tying unit 3. The frame 1 is configured to support a battery pack, the wire-tying unit 3 is detachably connected to the frame 1, the wire-tying unit 3 includes a base 31 and at least two wire-tying rods 32, the base 31 is detachably connected to the frame 1, all wire-tying rods 32 are arranged on the base 31 at intervals in a first direction (the first direction is the direction X shown in the figure), and all wire-tying rods 32 extend in a second direction (the second direction is the direction Y shown in the figure). The wire-tying rods 32 are configured to connect a connection wire of the battery pack, and the first direction is arranged at an angle with respect to the second direction. The connection wire of the battery pack includes wires connected to external mechanisms, such as a charging control wire, positive and negative electrode connection wires, a temperature control wire and a communication wire. When the battery rack is provided with the wire-tying unit 3 corresponding to each tray 2, the first direction is arranged in parallel with the vertical direction; and when the top of the battery rack is provided with a wire-tying unit 3, the first direction, the second direction and the vertical direction are arranged to be perpendicular to each other.

By arranging the battery rack with the wire-tying unit 3 having the wire-tying rods 32, the connection wires of each battery pack can be connected to the wire-tying rods 32 and arranged in the length direction of the wire-tying rods 32, so that the layout of multiple connection wires is orderly and arranged neatly, and it facilitates later maintenance and lookup. By arranging multiple wire-tying rods 32 at intervals, different connection wires can be connected to different wire-tying rods 32 at intervals so that the interference between different connection wires can be reduced. By detachably arranging the wire-tying unit 3 on the frame 1, the disassembly and assembly are convenient, the operator can select the number of wire-tying units 3 according to the practical demand, the waste of the wire-tying units 3 is reduced, and the later maintenance replacement or reuse is also facilitated.

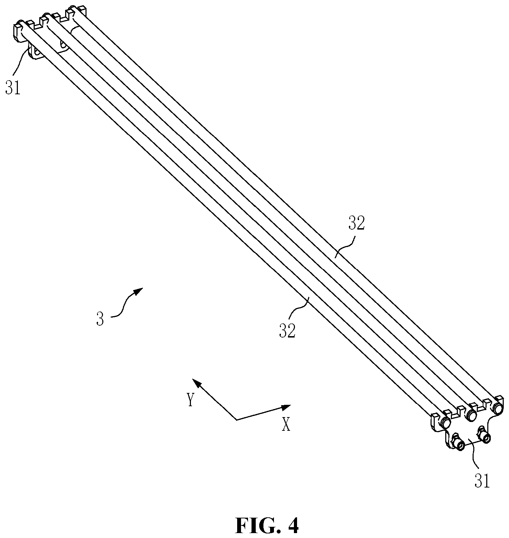

As shown in FIG. 4, one base 31 is arranged at each end of the wire-tying rods 32 in the second direction, and the wire-tying rods 32 are detachably connected to the base 31. By detachably connecting the wire-tying rods 32 to the base 31, the wire-tying unit 3 can be separated into two independent components for production and then assembled, the production difficulty of the wire-tying unit 3 is reduced, and the maintenance cost of the wire-tying unit 3 in replacing the wire-tying rod 32 or the base 31 in the later stage can be reduced. In this embodiment, two bases 31 are arranged in the second direction and are respectively adjacent to the two ends of the wire-tying rod 32 in the second direction so that the connection strength of the wire-tying rod 32 can be ensured and the shaking at the end of the wire-tying rod 32 can be reduced. Further, one, two, or more bases 31 are arranged between these two bases 31 to enhance the support strength of the middle position of the wire-tying rod 32.

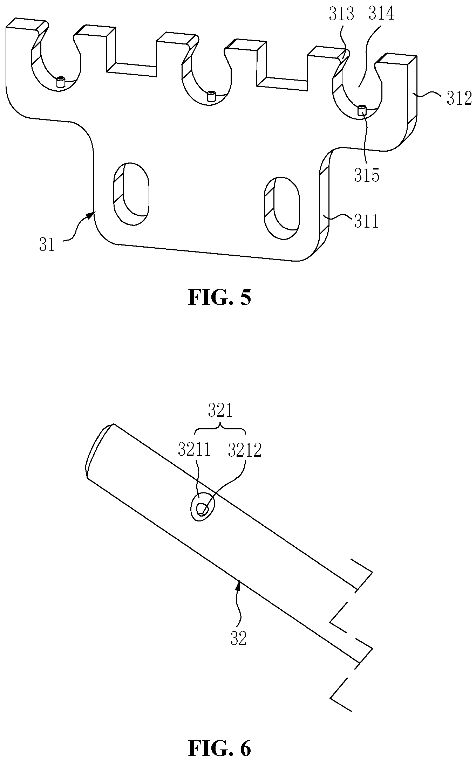

As shown in FIG. 5, the base 31 includes a main body 311, an engaging portion 312 and a limiting portion 313, the main body 311 is provided with at least three engaging portions 312 at intervals in the first direction, an engaging groove 314 is formed between two adjacent engaging portions 312, the wire-tying rod 32 is engaged with the engaging groove 314. At least one side of two adjacent sides of two adjacent engaging portions 312 is convexly provided with the limiting portion 313, and the limiting portion 313 is configured to block the wire-tying rod 32 to prevent the wire-tying rod 32 from disengaging from the engaging groove 314. By providing the engaging portions 312 to form multiple engaging grooves 314, the wire-tying rod 32 can be directly engaged with the engaging groove 314, which is convenient and quick, and facilitates the disassembly and assembly. With the arrangement of the limiting portion 313, the wire-tying rod 32 that is engaged with the engaging groove 314 can be effectively blocked and prevented from disengaging from the engaging groove 314, and the mounting stability of the wire-tying rod 32 is improved. The base 31 is simple in structure and convenient for integrated molding and production.

The spacing between two adjacent wire-tying rods 32 is greater than 30 mm, and too small spacing between the wire-tying rods 32 is prone to causing mutual interference between different connection wires that are respectively connected to two wire-tying rods 32, and a reasonable spacing size can ensure the space provided by the two adjacent wire-tying rods 32 for mounting the connection wires and reduce the interference between the connection wires. In other embodiments, the wire-tying rod 32 is provided with a through hole, the base 31 is provided with a threaded hole, and a bolt passes through the through hole and is screwed into the threaded hole, thereby also achieving the detachable connection between the wire-tying rod 32 and the base 31. The threaded connection is stable, and the disassembly and assembly are convenient. Of course, the wire-tying rod 32 may also be directly welded to the base 31 to ensure the strength of connection between the wire-tying rod 32 and the base 31. In this embodiment, the base 31 is provided with a waist-shaped hole, the frame 1 is provided with a threaded hole, and a bolt passes through the waist-shaped hole and is screwed into the threaded hole to achieve the connection between the base 31 and the frame 1, thereby achieving the detachable connection of the wire-tying unit 3 and the frame 1. The configuration of the waist-shaped hole can facilitate the adjustment of the position of the base 31, the threaded connection is stable, and the disassembly and assembly are convenient. Furthermore, the base 31 may also be connected to the frame 1 by snap fit.

As shown in FIG. 4, FIG. 5, and FIG. 6, the base 31 further includes a positioning portion 315, the positioning portion 315 protrudes from the groove bottom of the engaging groove 314, a positioning hole 321 is concavely provided in the periphery of the wire-tying rod 32, and the positioning portion 315 is inserted in the positioning hole 321. Through the cooperation of the positioning portion 315 and the positioning hole 321, in one aspect, the mounting position accuracy of the wire-tying rod 32 can be improved, to prevent the inconsistency in the length of the wire-tying rod 32 exposing from the base 31, and improve the coordination and aesthetics of the overall structure of the wire-tying unit 3; in another aspect, the wire-tying rod 32 may be a cylindrical rod, the engaging groove 314 may be an arc-shaped groove, and the positioning portion 315 being inserted into the positioning hole 321 can effectively limit the rotation of the wire-tying rod 32, and improve the connection stability of the wire-tying rod 32. Of course, in other embodiments, it is not limited to arranging the positioning portion 315 on the main body 311 and arranging the positioning hole 321 in the periphery of the wire-tying rod 32; alternatively, the positioning portion 315 may be arranged on the periphery of the wire-tying rod 32, and the positioning hole 321 may be arranged in the main body 311 and located between two adjacent engaging portions 312.

As shown in FIG. 6, the positioning hole 321 includes a guide hole 3211 and a connection hole 3212, the guide hole 3211 is concavely provided on the periphery of the wire-tying rod 32, and the aperture of the guide hole 3211 gradually decreases in its own hole depth direction, the hole bottom of the guide hole 3211 is provided with the connection hole 3212, and the positioning portion 315 is inserted in the connection hole 3212. With the arrangement of the guide hole 3211, the insertion of the positioning portion 315 can be guided, and the connection convenience of the positioning portion 315 and the connection hole 3212 is improved, avoiding alignment difficulty, uneasy insertion, and even structural damage.

In some embodiments, as shown in FIG. 1, FIG. 2 and FIG. 3, the battery rack further includes a tray 2 and an enclosure 4 detachably connected to the frame 1, multiple trays 2 are arranged on the frame 1 at intervals in the vertical direction, multiple enclosures 4 are arranged at the periphery of each tray 2, and the enclosures 4 around the periphery of each tray 2 enclose to form a mounting slot 5 for limiting the battery pack. The enclosures 4 are detachably connected to the battery rack to facilitate the disassembly and assembly of the enclosures 4, and at least one enclosure 4 is mounted on the battery rack after the battery pack is placed on the tray 2 to facilitate the placement of the battery pack and reduce the impact between the battery pack and the tray 2. The enclosure 4 is provided with a through hole, the frame 1 is provided with a threaded hole, and the enclosure 4 is connected to the frame 1 by a bolt passing through the through hole and screwed into the threaded hole. The threaded connection is stable, which facilitates the disassembly and assembly. Of course, it is also possible to provide the enclosure 4 with a snap member and provide the frame 1 with a snap groove, and the snap member is connected to the snap groove by snap fit. It is understandable that, with the arrangement of the enclosures 4, the circumferential side of the battery pack placed on the tray 2 can be effectively protected and blocked to avoid damage caused by an external structure striking the battery pack, or avoid the battery pack sliding from the tray 2, thereby improving the use safety of the battery pack on the tray 2.

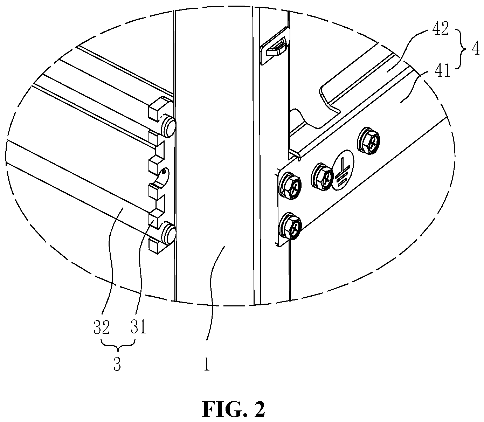

As shown in FIG. 2, the enclosure 4 includes a fixed part 41 and a blocking part 42, the fixed part 41 is detachably connected to the frame 1, the blocking part 42 is arranged to protrude from the fixed part 41 in a direction towards a side of the battery pack, and the blocking part 42 is configured to prevent the battery pack from being separated from the mounting slot 5. With the arrangement of the blocking part 42, the top side of the battery pack can be effectively blocked, the bounce of the battery pack is reduced, and the mounting stability of the battery pack is improved.

In other embodiments, as shown in FIG. 1, the battery rack includes at least two frames 1 and a connector, and two adjacent frames 1 are detachably connected through the connector. With the arrangement of the connector, multiple frames 1 can be spliced together so that the multiple frames 1 can be spliced into battery racks of different battery capacities; thus, the battery racks can meet the requirements of different scenarios and the versatility of the battery racks can be improved. In this embodiment, the frame 1 is provided with multiple expansion holes arranged at intervals, the expansion holes are threaded holes, the connector is provided with at least two rows of through holes, and bolts pass through the through holes and are screwed into the expansion holes to connect the connector to the frame 1 so that the two adjacent frames 1 are connected through the connector to perform the expansion of the battery rack.

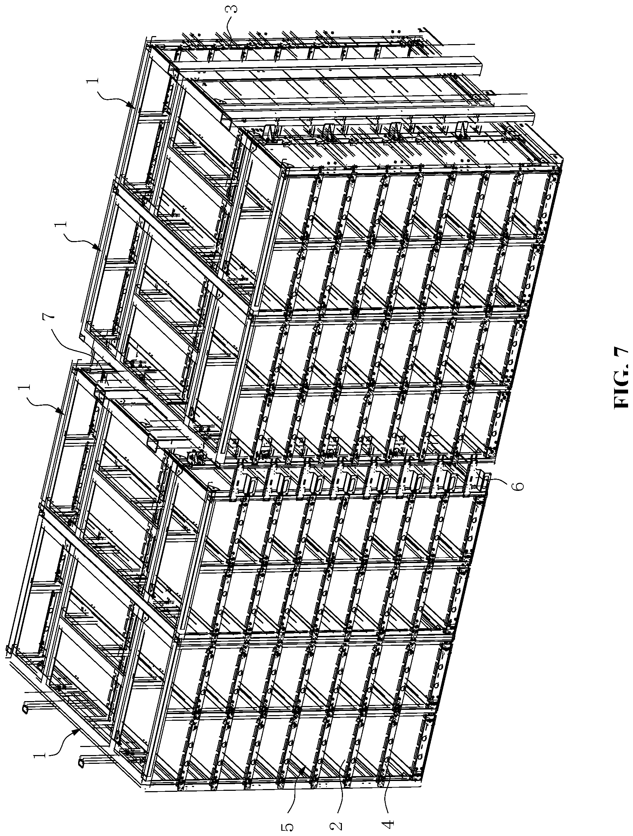

Exemplarily, as shown in FIG. 1, the battery rack includes two frames 1, the edges of the two frames 1 are aligned, and in this case, the connector includes a connection piece, and the connection piece is used to connect the expansion holes of the frames 1 to complete the installation of the battery rack consisting of two frames 1. Furthermore, as shown in FIG. 7, when the battery rack includes four frames 1, the connector includes a connection piece, a connection block 6 and a reinforcing connecting post 7, the four frames 1 are first divided into two frame groups, each frame group includes two frames 1, the two frames 1 of each frame group are connected by the connection piece, the two frame groups are arranged facing each other at an interval, the two frame groups are connected by the connection block 6 on the outermost sides of the frames 1, and the reinforcing connection post 7 is arranged in the interval area of the two frame groups. The reinforcing connection post 7 is connected to the frames 1 adjacent to the reinforcing connection post 7 in the two frame groups, so as to enhance the connection strength between the two frame groups. Of course, in other embodiments, the battery rack may also be provided with six, eight or more frames 1 according to the practical application requirements.

The battery rack further includes a separator 8, the separator 8 is detachably connected to the frames 1, and the separator 8 is located between two adjacent frames 1. With the arrangement of the separator 8, the battery packs on two adjacent frames 1 can be effectively blocked, when the battery pack is on fire, the spread of flame can be avoided, and the use safety of the battery rack is improved; therefore, the separator can be directly made of an insulating board with high flame retardance.

The tray 2 is provided therein with a liquid-cooling channel, the liquid-cooling channel is in communication with an external circulation mechanism through a liquid inlet pipe and a liquid outlet pipe, and the liquid inlet pipe and the liquid outlet pipe are bundled on the wire-tying rod 32. By setting the tray 2 with the liquid cooling structure, the tray 2 can not only support the battery pack, but also carry out liquid cooling on the battery pack without setting a traditional liquid-cooling plate, thereby reducing the space occupied by the liquid-cooling plate, and effectively improving the space utilization rate of the battery rack. For example, the external circulation mechanism transmits the coolant through the liquid inlet pipe to the liquid cooling channel for heat exchange, and after the heat exchange, and the coolant with a certain temperature is transported back to the external circulation mechanism via the liquid outlet pipe for liquid cooling again, so the continuous liquid cooling of the liquid cooling plate can be completed and the liquid cooling effect of the battery pack can be ensured.

The battery rack further includes a wire-tying seat, and multiple wire-tying seats are disposed at intervals on the wire-tying rod 32 in its own length direction. With the arrangement of the wire-tying seats, the connection wires can be bundled and connected at fixed points, and the connection wires may just be bundled on the wire-tying seat by using a tie-up belt, which reduces the sliding of the wire-tying belt, and ensures the stability of the connecting positions of the connection wires to the wire-tying rod 32. Of course, the connection wires may also be directly bundled on the wire-tying rod 32 by using the tie-up belt to complete the connection between the connection wires and the wire-tying rod 32. In addition, the connection wires may also be directly wound around the periphery of the wire-tying rod 32.

The length of the wire-tying rod 32 extends in the length direction of the connection wire. The wire-tying rod 32 is used for guiding the connection wires in the length direction, thereby making the layout of the connection wires more organized and reducing confusion.

## Claims

1. A battery rack, comprising a frame (1) and a wire-tying unit (3), wherein the frame (1) is configured to support a battery pack, the wire-tying unit (3) is detachably connected to the frame (1), the wire-tying unit (3) comprises a base (31) and at least two wire-tying rods (32), the base (31) is connected to the frame (1), the at least two wire-tying rods (32) are arranged on the base (31) at intervals in a first direction, the at least two wire-tying rods (32) extend in a second direction and are configured to connect a connection wire of the battery pack, and the first direction is arranged at an angle with respect to the second direction.

2. The battery rack according to claim 1, wherein one base (31) is arranged at each end of the at least two wire-tying rods (32) in the second direction, and the at least two wire-tying rods (32) are detachably connected to the base (31).

3. The battery rack according to claim 1 or 2, wherein the base (31) comprises a main body (311), an engaging portion (312) and a limiting portion (313), the main body (311) is provided with at least three engaging portions (312) arranged at intervals in the first direction, an engaging groove (314) is formed between two adjacent engaging portions (312) among the at least three engaging portions (312), a wire-tying rod (32) of the at least two wire-tying rods (32) is engaged with the engaging groove (314), the limiting portion (313) is convexly provided at at least one side of two adjacent sides of the two adjacent engaging portions (312), and the limiting portion (313) is configured to block the wire-tying rod (32) to prevent the wire-tying rod (32) from disengaging from the engaging groove (314).

4. The battery rack according to claim 3, wherein the base (31) further comprises a positioning portion (315), the positioning portion (315) is arranged to protrude from a groove bottom of the engaging groove (314), a positioning hole (321) is concavely provided in a periphery of the wire-tying rod (32), and the positioning portion (315) is inserted in the positioning hole (321).

5. The battery rack according to claim 4, wherein the positioning hole (321) comprises a guide hole (3211) and a connection hole (3212), the guide hole (3211) is concavely provided on the periphery of the wire-tying rod (32), an aperture of the guide hole (3211) gradually decreases in a hole depth direction of the guide hole (3211), the connection hole (3212) is opened at a hole bottom of the guide hole (3211), and the positioning portion (315) is inserted in the connection hole (3212).

6. The battery rack according to any one of claims 1 to 5, further comprising a tray (2) and an enclosure (4) detachably connected to the frame (1), wherein a plurality of trays (2) are arranged on the frame (1) at intervals in a vertical direction, a plurality of enclosures (4) are arranged at a periphery of each of the plurality of trays (2), and the plurality of enclosures (4) around the periphery of each of the plurality of trays (2) enclose to form a mounting slot (5) for limiting the battery pack.

7. The battery rack according to claim 6, wherein one or a combination of the following is satisfied:
the enclosure (4) comprises a fixed part (41) and a blocking part (42), the fixed part (41) is detachably connected to the frame (1), the blocking part (42) is arranged to protrude from the fixed part (41) towards a side of the battery pack, and the blocking part (42) is configured to prevent the battery pack from detaching from the mounting slot (5); and
a liquid-cooling channel is provided within the tray (2) and is in communication with an external circulation mechanism through a liquid inlet pipe and a liquid outlet pipe, and the liquid inlet pipe and the liquid outlet pipe are bundled on the wire-tying rod (32).

8. The battery rack according to any one of claims 1 to 7, wherein at least two frames (1) and a connector are provided, wherein two adjacent frames (1) of the at least two frames (1) are detachably connected by the connector.

9. The battery rack according to claim 8, further comprising a separator (8), wherein the separator (8) is detachably connected to the at least two frames (1), and the separator (8) is located between two adjacent frames (1) of the at least two frames (1).

10. The battery rack according to any one of claims 1 to 9, wherein one or a combination of the following is satisfied:
the battery rack further comprises a wire-tying seat, and a plurality of wire-tying seats are disposed at intervals on the at least two wire-tying rods (32) in a length direction of the at least two wire-tying rods (32); and
a length of the at least two wire-tying rods (32) extends in a length direction of the connection wire.
